# EUROPEAN PATENT SPECIFICATION

(11) **EP 1 566 286 B1**
(45) Date of publication and mention of the grant of the patent: **25.03.2009**
(21) Application number: 05001146.9
(22) Date of filing: 20.01.2005
(51) Int. Cl.: B60B 27/00

(54) **Race member in hub unit and method of producing the same**
Laufringeinheit in einer Nabe und Verfahren zu seiner Herstellung
Piste du roulement dans le moyeu et procédé pour sa fabrication

(30) Priority: 20.02.2004 JP 2004044237
(43) Date of publication of application: 24.08.2005
(73) Proprietor: NSK LTD, Shinagawa-ku Tokyo (JP)
(72) Inventor: Kobayashi, Kazuto, Fujisawa-shi Kanagawa (JP); Shintou, Isao, Fujisawa-shi Kanagawa (JP); Ootsuka, Kiyoshi, Fujisawa-shi Kanagawa (JP); Mori, Kouhei, Fujisawa-shi Kanagawa (JP)
(74) Representative: Grünecker, Kinkeldey, Stockmair & Schwanhäusser Anwaltssozietät

(56) References cited:
- FR-A- 2 103 756
- JP-A- 2003 025 803
- US-A- 5 174 025
- US-A- 5 619 879
- US-A1- 2003 009 884

## Description

### BACKGROUND OF THE INVENTION

### Field of the Invention

The present invention relates to a method of producing a race member (hub, outer race) in a hub unit for supporting a wheel.

### Background Art

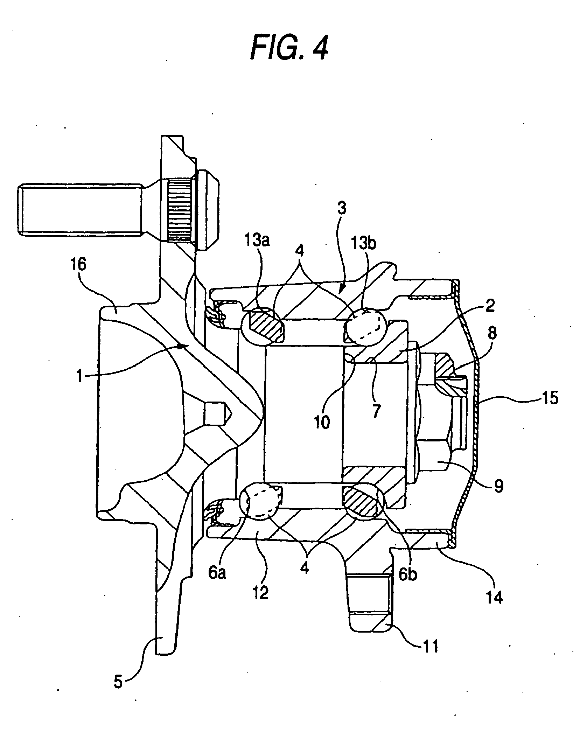

A wheel of an automobile is supported by a suspension by means of a hub unit for supporting the wheel. Fig. 4 shows a first example of a hub unit for supporting a wheel which has been known in a background art for a driven wheel (rear wheel of FF vehicle, front wheel of FR vehicle and RR vehicle) . The hub unit for supporting the wheel includes a hub 1 constituting a race member, an inner race 2, an outer race 3 similarly constituting a race member, and a plurality of pieces of rolling members 4, 4.

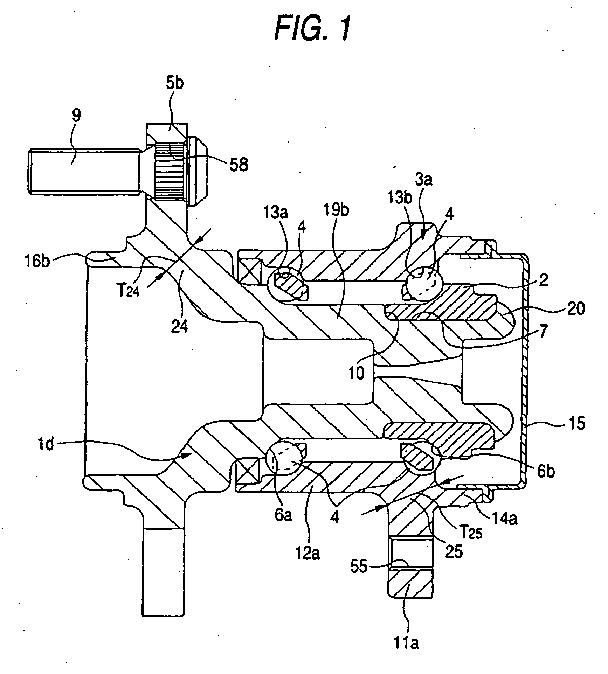

A portion proximate to a side of an outer end ('outer' in an axial direction designates an outer side in a width direction of a vehicle in a state of being integrated to an automobile which is a left side in Figs.1, 4 through 7. Conversely, 'inner' in the axial direction designates a side of a center in the width direction of the vehicle which is a right side of Figs.1, 4 through 7. The same goes with a total of the specification) of an outer end of an outer peripheral face of the hub 1 there among is formed with an attaching flange 5 constituting a flange portion, a middle portion thereof is formed with a first inner race track 6a, a portion thereof proximate to a side of an inner end is formed with a small diameter stepped portion 7 having an outer diameter dimension smaller than that of the portion formed with the first inner race track 6a, and an inner end portion thereof is formed with a male screw portion 8, respectively. Further, there are a case in which the first inner race track 6a is formed directly at the outer peripheral face of the middle portion of the hub 1 as illustrated as well as a case in which the inner race track 6a is formed at an outer peripheral face of an inner race constituting a separate member outwardly fitted to the middle portion of the hub.

Further, the inner race 2 is fitted to the small diameter stepped portion 7. Such an inner race 2 is screwed to the male screw portion, and is pressed to a stepped difference face 10 present at a base end portion of the small diameter stepped portion 7 by a fastened nut 9. An outer peripheral face of such an inner race 2 is formed with a second inner race track 6b.

Further, a total of the outer race 4 is constituted in a cylindrical shape and a portion proximate to a side of an inner end of an outer peripheral face thereof is provided with a coupling flange 11 constituting a flange portion. Further, a first, a second outer race track 13a, 13b are formed at an inner peripheral face of a main body 12 in a cylindrical shape constituting a cylinder portion present on an outer side in an axial direction of the coupling flange 11 as well as an inner face of a portion thereof provided with the coupling flange 11. Further, respective pluralities of pieces of the rolling members 4, 4 are provided between the first and the second respective outer race tracks 13a, 13b and the first and second respective inner race tracks 6a, 6b. Further, although in the illustrated example, balls are used as the respective rolling members 4, 4, in a case of a hub unit for supporting a wheel for an automobile which is heavily weighted, there is also a case of using tapered rollers as the rolling members. Further, a cover 15 is inwardly fitted to fix to a cylinder portion 14 for fitting in a cylindrical shape constituting a second cylinder portion present at a portion of the outer race 4 on an inner side in the axial direction of the coupling flange 11.

When the hub unit for the wheel of the first example constituted as described above is integrated to an automobile, the coupling flange 11 provided at the outer peripheral face of the outer race 4 is coupled to fix to a knuckle constituting a suspension. Along therewith, rotating members for braking of a wheel, a brake rotor and the like constituting the wheel are coupled to fix to the attaching flange 5 provided at the outer peripheral face of the portion of the hub 1 proximate to the side of the outer end in a state of being outwardly fitted to a guide cylinder portion 16 in a cylindrical shape constituting a second cylinder portion formed at an outer end portion of the hub 1.

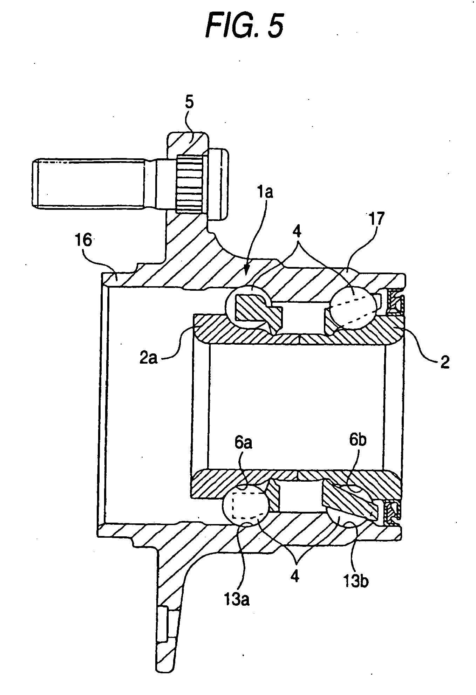

Next, Fig.5 shows a second example of a hub unit for supporting a wheel which has been known in a background art similarly for a driven wheel. The hub unit for supporting the wheel of the second example is constituted with a hub 1a having the attaching flange 5 at a portion proximate to a side of an outer end of an outer peripheral face thereof in a cylindrical shape. Along therewith, the outer race tracks 13a, 13b in double rows are formed at an inner peripheral face of a main body 17 in a cylindrical shape constituting a cylinder portion present at a portion of the hub 1a on an inner side in an axial direction of the attaching flange 5. Further, a pair of inner races 2a, 2 are provided on an inner side in a diameter direction of the hub 1a. Further, respective pluralities of pieces of the rolling members 4, 4 are provided between the respective inner race tracks 6a, 6b formed at outer peripheral faces of the respective inner races 2a, 2 and the respective outer race tracks 13a, 13b.

When the hub unit for supporting the wheel of the second example constituted as described above is integrated to an automobile, the respective inner races 2a, 2 are outwardly fitted to fix to a supporting shaft which is not rotated even when used constituting a suspension. Along therewith, a wheel and a rotating member for braking constituting the wheel is coupled to fix to the attaching flange 5 provided at an outer peripheral face of a portion of the hub 1a proximate to an outer end thereof in a state of being outwardly fitted to the guide cylinder portion 16 constituting the second cylinder portion provided at the outer end portion of the hub 1a.

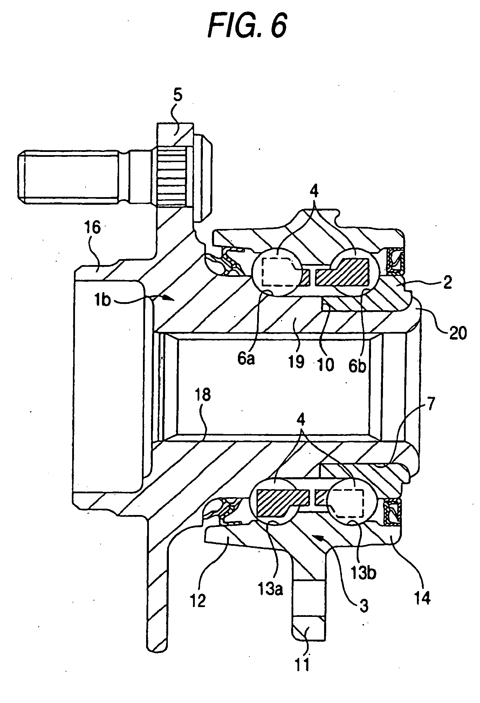

Next, Fig.6 shows a third example of a structure of a background art of a hub unit for supporting a wheel for a drive wheel (front wheel of FF vehicle, rear wheel of FR vehicle and RR vehicle, all wheels for 4WD vehicle) . The hub unit for supporting the wheel is for the drive wheel and therefore, a center portion of the hub 1b is provided with a spline hole 18 for engaging a spline shaft constituting the drive shaft. Further, in the case of the illustrated example, a calking portion 20 is formed by plastically deforming an inner end portion of the shaft portion 19 in a cylindrical shape constituting a cylinder portion present on an inner side in an axial direction of the attaching flange 5 to an outer side in a diameter direction. Further, an inner end face of the inner race 2 is pressed by the calking portion 20. A structure and operation of other portion are substantially similar to those of the case of the first example shown in Fig. 4, mentioned above.

Further, in the above-described cases of the hub unit for supporting the wheel of the first through the third examples, the hubs 1, 1a, 1b and the outer race 3 having the flange portions (attaching flange 5, coupling flange 11) at the outer peripheral faces are frequently constituted by products formed by hot forging. However, in forming the products by hot forging in this way, not only cost of energy required for working is increased but also a margin for turning after working a material by hot forging is increased and therefore, yield of the material is deteriorated and as a result, there poses a problem that fabricating cost is increased.

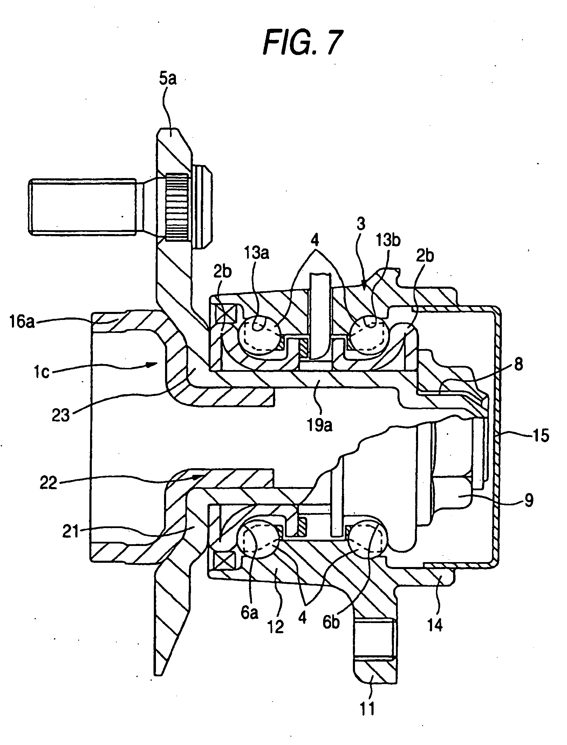

Next, Fig.7 shows a fourth example of a structure of a background art of a hub unit for supporting a wheel described in JP-A-2003-159904. In the case of a hub unit for supporting a wheel of the fourth example, a hub 1c is constituted by a product formed by deep drawing which is a kind of cold plastic working. That is, the hub 1c is constituted by combining a first and a second hub element 21, 22 by subjecting metal plates respectively constituting materials to deep drawing to each other. The first hub element 21 in the two elements is constituted substantially by an L-like shape in a section thereof and in a shape of a circular cylinder for a total thereof, and includes a shaft portion 19a in a cylindrical shape constituting a cylinder portion and an attaching flange 5a in a shape of a circular ring constituting a flange portion. On the other hand, the second hub element 22 is constituted by a crank shape in a section thereof and in a shape of a circular ring for a total thereof and a cylinder portion on a large diameter side is constituted by a guide cylinder portion 16a constituting a second cylinder portion. Further, the hub 1c is constituted by coupling to fix (fix by press-fit, fix by calking, fix by welding or the like) the first and the second hub elements 21, 22 as illustrated. Further, in the illustrated example, the pair of inner race tracks 6a, 6b are formed at outer peripheral faces of a pair of inner races 2b, 2b made by sheet drawing outwardly fitted to the shaft portion 19a. A structure and operation of other portion are substantially similar to those of the above-described case of the first example shown in Fig. 4.

In the above-described case of the fourth example of the structure of the background art, in subjecting the metal plate constituting the material to deep drawing in order to produce the above-described first hub element 21, walls of the shaft portion 19a constituting the first hub element 21 and a portion 23 continuous to the shaft portion 19a and the attaching flange 5a are thinned. That is, wall thicknesses of the shaft portion 19a and the continuous portion 23 become smaller than a wall thickness of the metal plate constituting the material. In contrast thereto, the continuous portion 23 is a portion applied with a large load when used. Therefore, in order to sufficiently ensure a strength (wall thickness) of the continuous portion 23, it is necessary to use the metal plate constituting the material having a sufficiently large wall thickness. Therefore, there is brought about a drawback that a weight of the hub 1c becomes heavy.

Further, the guide cylinder portion 16a constituting the hub 1c is a portion extended in a direction opposed to the shaft portion 19a in an axial direction from an inner end portion in a diameter direction of the attaching flange 5a. Such a guide cylinder portion 16a is not integrally formed with the attaching flange 5a and the shaft portion 19a by only subjecting the metal plate to deep drawing. Therefore, when the hub 1c is going to be formed by subjecting the metal plates constituting the materials to deep drawing as in the above-described fourth example of the structure of the background art, in order to form the cylinder portion 16a, it is necessary to produce the second hub element 22 which is a member separate from the first hub element 21. Therefore, there poses a problem that the weight of the hub 1c similarly becomes heavy and the fabrication cost is increased by increasing a number of parts.

Further, although illustration is omitted, Japanese Patent No. 3352226 describes a hub unit for supporting a wheel constituting an outer race having a flange portion at an outer peripheral face by a product formed by deep drawing. Also in the case of the hub unit for supporting the wheel, the outer race is produced by deep drawing and therefore, there is brought about a drawback similar to that of the above-described case of the hub 1c with regard to the outer race.

From prior at US 5,619,879 a method for the non-cutting production of a hub for a transmission component is known. According to the teaching of this prior art a cap is deformed by spinning the cap around a central pool pin into a cylindrical projection projecting from a round plate, whereas the cylindrical projection is subsequently opened in order to receive a coaxial shaft.

### SUMMARY OF THE INVENTION

In view of the above-described situation, a method of producing a race member in a hub unit for supporting a wheel has been invented so that a race member which is sufficiently light-weighted with a high strength can be produced inexpensively.

The above object is achieved by a method as defined in claim 1. A preferred embodiment thereof as defined in claim 2.

As described above, in the case of the race member in the hub unit for supporting a wheel, the method of producing the same and the hub unit for supporting a wheel according to the invention, the race member is produced by subjecting the metal plate to cold plastic working. When the metal plate is subjected to cold plastic working in this way, dimension accuracy after the working can be improved and therefore, working for ensuring accuracy to be performed thereafter can be reduced or omitted. Further, in the case of the invention, the race member is produced as an integrally formed product. Therefore, yield of the material can be improved. Further, it is not necessary to couple a plurality of members by welding or the like and therefore, a reduction in fabricating cost can be achieved. Further, in the case of the invention, the portion continuous to the cylinderportion and the flange portion forming the race member is made larger in thickness than the metal plate to be used as a material. Therefore, without using a metal plate having a large wall thickness more than necessary, a strength (wall thickness) of the continuous portion can sufficiently be ensured. Therefore, a reduction in fabricating cost and light-weighted formation can be achieved also in this regard.

### BRIEF DESCRIPTION OF THE DRAWINGS

The present invention may be more readily described with reference to the accompanying drawings:
Fig.1 is a sectional view showing an embodiment obtained by the inventive method.
Figs.2A-2L are sectional views and a plan view showing steps of fabricating a hub.
Fig. 3A-O are sectional views and plan views showing steps of fabricating an outer race.
Fig. 4 is a sectional view showing a first example of a hub unit for supporting a wheel which has been known in a background art.
Fig.5 is a sectional view showing a second example of the background art.
Fig.6 is a sectional view showing a third example of the background art.
Fig.7 is a sectional view showing a fourth example of the background art.

### DETAILED DESCRIPTION OF THE PREFERRED EMBODIMENTS

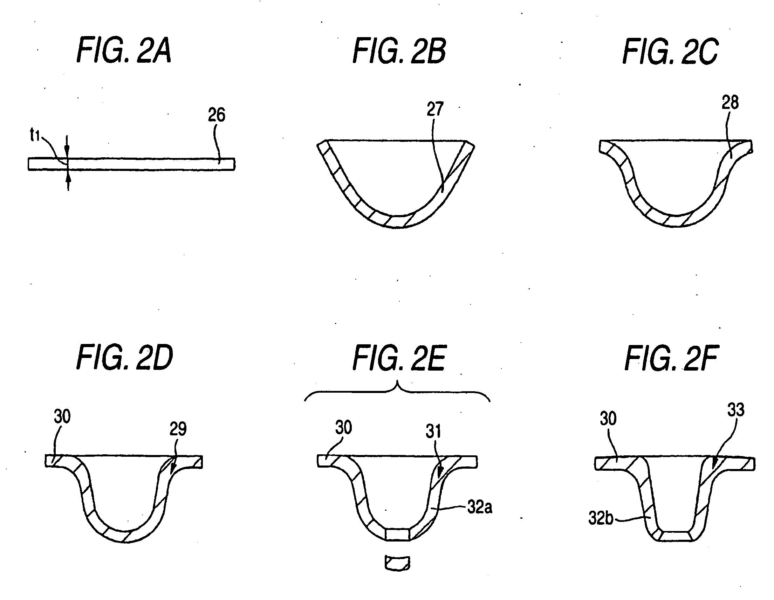

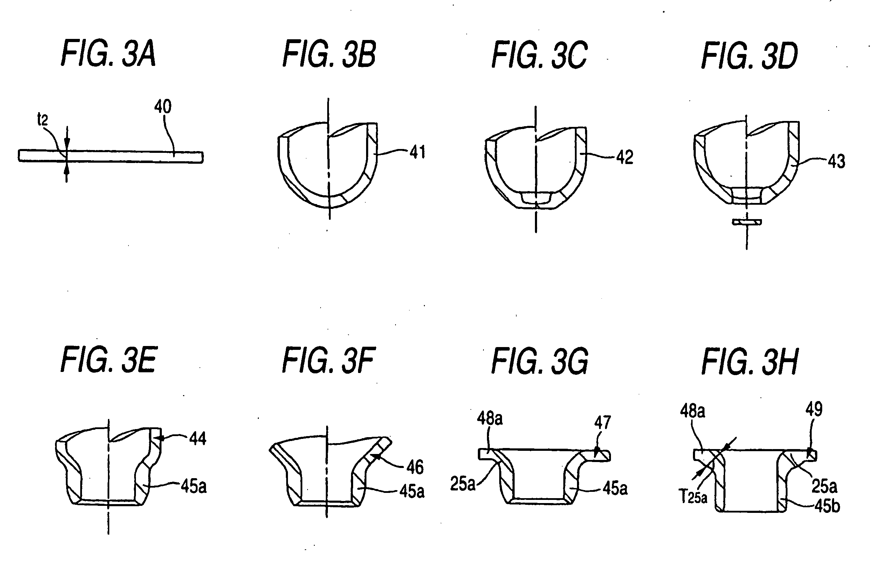

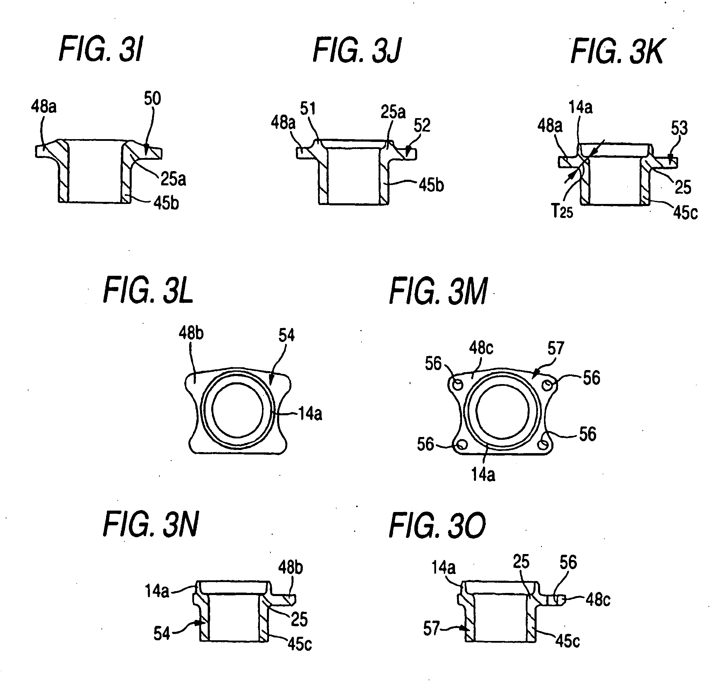

Figs.1 through 3O show an embodiment of the invention. A hub unit for supporting a wheel according to the embodiment is for a driven wheel and a basic structure thereof is substantially similar to that of the hub unit for supporting a wheel of the first example of the above-described structure of the background art shown in Fig.4. However, in the case of the hub unit for supporting a wheel of the embodiment, the inner race 2 is pressed to the stepped difference face 10 by the calking portion 20 formed by plastically deforming an inner end portion of a hub 1d to an outer side in a diameter direction. Further, in the case of the hub unit for supporting a wheel of the embodiment, the hub 1d and an outer race 3a respectively constituting race members are integrally formed by subjecting metal plates respectively constituting materials to punching and cold plastic working. Wall thicknesses T₂₄, T₂₅ of portions 24, 25 continuous to cylinder portions (shaft portion 19b, main body 12a) and flange portions (attaching flange 5b, coupling flange 11a) are made to be larger than wall thicknesses t₁, t₂ {refer to Fig. 2 (A), Fig. 3 (A)} of metal plates constituting materials therefor CT₁₁>t₁, T₂₅>t₂). An explanation will be given of steps of fabricating the hub 1d and the outer race 3a of the embodiment as follows.

Figs. 2A-L show steps of fabricating the hub 1d. Further, all of respective steps shown in Figs. 2B through 2D and 2F through 2J are steps of cold plastic working. In the case of fabricating the hub 1d, first, by punching a metal plate constituting a material (for example, a plate made of S55C through S48C which can be quenched by high frequency after forming can be used. The plate thickness t₁ is determined in consideration of a size of the hub 1d to be produced), a material plate 26 shown in Fig. 2A can be provided. In the case of the embodiment, a planer shape (shape viewed from upper side or lower side of the drawing) is constituted by a circular shape. Successively, by drawing the material plate 26, there is constituted a first intermediate material 27 having a section substantially in a V-like shape a center portion of which is considerably recessed as shown in Fig.2B.

Successively, a middle portion in an axial direction (up and down direction of the drawing) of the first intermediate material 27 is necked (contract diameter) in two steps. That is, in necking at a first step, a second intermediate material 28 as shown in Fig.2C is formed and by necking in a second step, a third intermediate material 29 as shown in Fig.2D is formed. Further, by subjecting material to respective necking, an attaching a flange element 30 functioning as a flange portion is formed at an outer peripheral face of one end portion (upper end portion of the drawing) of the third intermediate material 29. Successively, by punching (piercing) a center portion of a bottom portion present at other end portion (lower end portion of the drawing) of the third intermediate material 29, a fourth intermediate material 31 as shown in Fig.2E is formed. By producing the fourth intermediate material 31 in this way, a shaft portion element 32a functioning as a cylinder portion is formed at a portion on an inner diameter side of the fourth intermediate material 31.

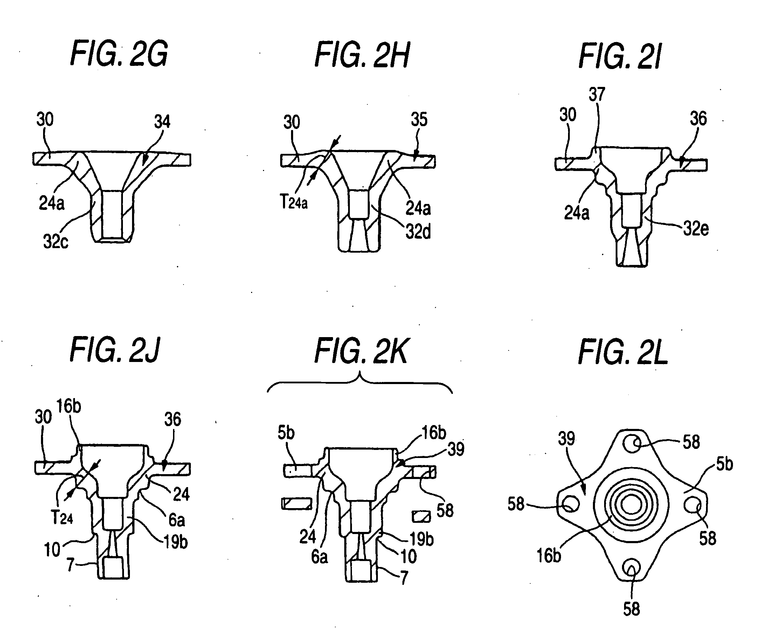

Successively, the shaft portion element 32 constituting the fourth intermediate material 31 is necked in two steps. That is, by necking at a first step, a fifth intermediatematerial 33 as shown in Fig. 2F is formed and by necking at a second step, a sixth intermediate material 34 as shown in Fig.2G is formed. Further, by respectively necking in this way, wall thicknesses of respective portions constituting the sixth intermediate material 34 (shaft portion element 32c, a portion 24a continuous to the shaft portion element 32c and attaching flange element 30) are increased. Successively, the shaft portion element 32c constituting the sixth intermediate material 34 is subj ected to diameter contracting and drawing with ironing. Thereby, a seventh intermediate material 35 as shown in Fig.2H is formed by contracting a diameter of the shaft portion element 32c and by making a portion of a wall of the shaft portion element 32c plastically flow to the continuous portion 24a. In the case of the embodiment, in a state of providing the seventh intermediate material 35 in this way, a wall thickness T₂₄ₐ of the continuous portion 24a constituting the seventh intermediate material 35 is made to be sufficiently larger than the wall thickness t₁ of the material plate 26 (T₂₄ₐ>t₁).

Successively, an eighth intermediate material 36 as shown in Fig.2I is formed by subjecting respective portions of the seventh intermediate material 35 to predetermined plastic working. Particularly, at this occasion, a guide cylinder portion element 37 in a cylindrical shape extended in a direction opposed to a shaft portion element 32e in an axial direction is formed at an inner end portion in a diameter direction of the attaching flange element 30 constituting the eighth intermediate element. Successively, a ninth intermediate material 38 as shown in Fig. 2J is formed by subjecting respective portions of the eighth intermediatematerial 36 to predetermined plastic working. Particularly, at this occasion, by shaping outer shapes of the guide cylinder portion element 37 and the shaft portion element 32e constituting the eighth intermediate material 36, the guide cylinder portion 16b and the shaft portion 19b are respectively constituted. Further, in the case of the embodiment, the ninth intermediate material 38 is constituted in a state of providing the ninth intermediate material 38 in this way. The wall thickness T₂₄ of the portion 24 continuous to the attaching flange element 30 and the shaft portion 19b is made to be larger than the wall thickness t₁ of the material plate 26 (T₂₄>t₁).

Successively, by subjecting the attaching flange element 30 constituting the ninth intermediate material 38 to working for shaping an outer shape of the attaching flange element 30, a tenth intermediate material 39 as shown in Figs.2K and 2L is formed. That is, at this occasion, by subjecting the attaching flange element 30 constituting the ninth intermediate material 38 to chipping off (trimming) for shaping a shape of an outer peripheral edge and punching (piercing) for forming a hole 58 for press-fitting a stud 9 (Fig.1), the attaching flange element 30 is made to constitute the attaching flange 5b.

When the above-described tenth intermediate material 39 is provided, thereafter, by subjecting respective portions of the tenth intermediate material 39 to turning and polishing for constituting accuracy, there is provided the hub 1d as shown in Fig.1 (however, the calking portion 20 is not formed at the inner end portion and the shape of the inner end portion is a cylindrical shape). Further, when the metal plate is subjected to cold plastic working to form as in the embodiment, working accuracy can be improved. Therefore, when shape accuracy of a state of providing the tenth intermediate material 39 is excellent, the above-described working for constituting accuracy which is carriedout for the tenth intermediate material 39 can also be omitted.

Next, Figs. 3A-O show steps of fabricating the outer race 3a. Further, all of respective steps shown in Figs.3B through 3K, and 3M and 3O are steps of cold plastic working. In fabricating the outer race 3a, first, by punching a metal plate constituting a material (for example, a plate made of S55C through S48C which can be quenched by high frequency after forming can be used. The plate thickness t₂ is determined in consideration of a size of the outer race 3a to be produced), a material plate 40 as shown in Fig.3A is provided. In the case of the embodiment, a planer shape (shape viewed from upper side or lower side of the drawing) of the material plate 40 is constituted by a quadrangular shape. Thereby, yield in providing the material plate 40 by punching the metal plate (for example, strip plate or coil member) constituting the material as described above is increased.

When the above-described material plate 40 is provided, successively, by drawing the material plate 40, there is formed a first intermediate material member 41 one end side (upper side of the drawing) of which is opened, a section of which is in a U-like shape and in a shape of a bottomed cylinder as shown in Fig.3B. Further, generally, in the case of drawing the material plate, when a thickness of the material plate is increased, a radius of curvature of a front end portion of a drawing die to be used is also increased. As a result, particularly, when a planer shape of the material plate is a circular shape, a sufficient cushion force is difficult to be exerted and when the material plate is drawn, a side thereof is liable to be shifted. In contrast thereto, when the planer shape of the material plate 40 is formed by the quadrangular shape as in the embodiment, the cushion force is operated to concentrate on four portions of corner portions of the material plate 40, further, the side can be made to be difficult to shift when the material plate is drawn as described above since uniform curl is present at the four portions of the material plate 40. Successively, by coining a bottom portion of the first intermediate material 41, there is formed a second intermediate material 42 a wall thickness of a bottom portion of which is thin at a center portion and thick at a peripheral edge portion, as shown in Fig. 3C. Successively, by punching (piercing) the center portion the wall thickness of which is thinned in the bottom portion of the second intermediate material 42, a third intermediate material 43 as shown in Fig.3D is formed. Successively, by contracting a diameter of a half portion on other end side (lower side of the drawing) of the third intermediate material 43, a fourth intermediate material 44 as shown in Fig.3E is formed. Further, a main body element 45a in a cylindrical shape constituting a cylinder portion is constituted by the half portion on the lower end side of the fourth intermediate material 44 a wall thickness of which is increased by contracting the diameter in this way.

Successively, the half portion on one end side of the fourth intermediate material 44 is pressed to open over an entire periphery thereof in two steps. That is, by pressing to open the half portion at a first step, there is constituted a fifth intermediate material 46 a half portion on one end side of which is pressed to open by 45 degrees relative to a center axis as shown in Fig. 3F. Further, by pressing to open the half portion at a second step, there is formed a sixth intermediate material 47 a half portion on one end side of which is pressed to open by 90 degrees relative to the center axis as shown in Fig.3G. Further, the half portion on the one end side pressed to open by 90 degrees relative to the center axis in this way is made to constitute a coupling flange element 48a constituting a flange portion. Further, generally, in a case of forming a flange portion by pressing to open an end portion of a cylindrical member horizontally, when the end portion of the cylindrical member is continuous over an entire periphery thereof, a large tensile stress in a circumferential direction is applied when the end portion is pressed to open, a material is liable to be ruptured. In contrast thereto, in the case of the embodiment, since the planer shape of the material plate 40 is the quadrangular shape, the half portion on the one end side of the fourth intermediate material 44 constituting the portion to be pressed to open is not constituted by the shape continuous over the entire periphery (shape in which four portions in a circumferential direction are projected from an axial direction than other portions). Therefore, operation of pressing to open the half portion on the one end side of the fourth intermediate material 44 as described above becomes operation near to simple bending, a large tensile stress in the circumferential direction is not applied and the material is not liable to be ruptured.

At any rate, when the above-described sixth intermediate material 47 is provided, successively, the main body element 45a constituting the sixth intermediate material 47 is subjected to drawing with ironing. Thereby, a seventh intermediate material 49 as shown in Fig.3H is formed by making a portion of a wall of the main body element 44a plastically flow to a portion 25a continuous to the main body element 45a and the coupling flange element 48a. In the case of the embodiment, by providing the seventh intermediate material 49 in this way, a wall thickness T₂₄ₐ of the continuous portion 25a constituting the seventh intermediate material 49 is made to be sufficiently larger than the wall thickness t₂ of the material plate 40 (T₂₄>t₂) .

Successively, by pressing other end face of a main body element 45b in an axial direction {upper side of Fig.3H} in a state of fixing the coupling flange element 48a constituting the seventh intermediate material 49, an eighth intermediate material 50 as shown in Fig.3I is formed by making a portion of a wall of the continuous portion 25a plastically flow in a direction opposed to the main body element 44b in the axial direction. Successively, by forming a wall raised at one end face of the continuous portion 25a constituting the eighth intermediate material 50, there is formed a ninth intermediate material 52 including a fitting cylinder portion element 51 in a cylindrical shape at one end face of the continuous portion 25a. Successively, by subjecting respective portions of the ninth intermediate material 52 to predetermined plastic working, a tenth intermediate material 53 as shown in Fig. 3K is formed. Particularly, at this occasion, a fitting cylinder portion 14a is constituted by shaping an outer shape of the fitting cylinder portion element 51 constituting the ninth intermediate material 52. Further, in the case of the embodiment, in a state of providing the tenth intermediate material 53 in this way, the wall thickness T₂₅ of the portion 25 continuous to a coupling flange element 48a and the main body element 45c is made to be larger than the wall thickness t₂ of the material plate 40 (T₂₅>t₂).

Successively, by subjecting the coupling flange element 48a constituting the tenth intermediate material 53 to chipping off (trimming) for shaping an outer shape of the coupling flange element 48a, an eleventh intermediate material 54 as shown in Figs.3L and 3N is provided. Further, as shown in Fig.3L, a planer shape of an outer peripheral edge of the coupling flange element 48b constituting the eleventh intermediate material 54 is substantially a quadrangular shape. Meanwhile, in the case of the embodiment, the planer shape of the material plate 40 is formed by the quadrangular shape as described above and therefore, also a planer shape (not illustrated) of the outer peripheral edge of the coupling flange element 48a constituting the tenth intermediate material 53 becomes substantially a quadrangular shape. Therefore, in the case of the embodiment, an amount of chipping off the outer peripheral edge portion of the coupling flange element 48a can be reduced. Therefore, the yield of the material can be improved.

When the above-described eleventh intermediate material 54 is provided, successively, by respectively punching (piercing) four portions in a circumferential direction of a coupling flange element 48b constituting the eleventh intermediate material 54, there is constituted a twelfth intermediate material 57 formed with element holes 56, 56 for forming screw holes 55 (Fig. 1) for screwing coupling bolts as shown in Fig.3M and 3O.

when the above-described twelfth intermediate material 57 is provided, thereafter, the outer ring 3a as shown in Fig.1 is provided by turning for forming the outer race tracks 13a, 13b (Fig.1) of double rows at an inner peripheral face of the twelfth intermediate material 57, tapping inner peripheral faces of the respective element holes 56, 56 for forming screw grooves, and turning and polishing for constituting accuracy. Further, when the invention is embodied, the outer race tracks 13a, 13b of double rows can also be formed by the above-described cold plastic forming. Further, similar to the above-described case of steps of fabricating the hub 1d, when shape accuracy of a state of providing the twelfth intermediate material 57 is excellent, the above-described working for constituting accuracy which is carried out for the twelfth intermediate material 57 can also be omitted.

As described above, in the case of the embodiment, the hub 1d and the outer race 3a are produced by subjecting the metal plates to cold plastic working and therefore, dimensional accuracy after the cold plastic working can be improved. Therefore, working for constituting accuracy which is carried out thereafter can be reduced or can be omitted. Further, in the case of the embodiment, the hub 1d and the outer race 3a are constituted by integrally molded products. Therefore, yield of material can be improved, further, since a plurality of members need not to couple by welding or the like, fabricating cost can be reduced. Further, in the case of the embodiment, wall thicknesses T₂₄, T₂₅ of the portions 24, 25 continuous to the cylinder portions (shaft portion 19b, main body 12a) constituting the hub 1d and the outer race 3a and the flange portions (attaching flange 5b, coupling flange 11a) can be made to be larger than the wall thicknesses t₁, t₂ of the metal plates constituting the material plates (T₂₄> t₁, T₂₅> t₂). Therefore, even when metal plates having large wall thicknesses more than necessary are not used, strength (wall thickness) of the respective continuous portions 24, 25 are sufficiently be ensured. Therefore, a reduction in fabricating cost and light-weighted formation can be achieved also in this regard.

Further, the invention is not limited to the structure of the above-described embodiment but applicable also to, for example, the hub 1a forming the hub unit for supporting the wheel for the driven wheel as shown in Fig. 5, mentioned above, and the hub 1b forming the hub unit for supporting the wheel for the drive wheel as shown in Fig.6, mentioned above.

Further, when the invention is embodied, the material of the metal plate for producing the race member is not limited to the material exemplified in the above-described embodiment but various materials can be used therefor.

## Claims

1. A method of producing a race member in a hub unit for supporting a wheel, which comprises
a cylinder portion (32);
a flange portion (30) bent outward from the cylinder portion in a diameter direction thereof; and
a continuous portion (24) that integrally connects the cylinder portion (32) with the flange portion,
the method comprising:
subjecting a metal plate (26) to punching and cold plastic working to form the cylinder portion (32), the flange portion (30) and the continuous portion (24), contracting the cylinder portion (32) diametrally to increase a wall thickness of the cylinder portion (32); and
making a portion of a wall of the cylinder portion (32) plastically flow to the continuous portion (24) to make the continuous portion (24) larger in thickness than the metal plate,
wherein the continuous portion(24) is larger in thickness than the metal plate (26).

2. A method of producing a race member in a hub unit for supporting a wheel according to claim 1, said race member further comprising
a second cylinder portion (51) extending from a radial inner end of the flange portion (48),
wherein the second cylinder portion (51) extends in an axial direction opposite to the cylinder portion (45),
the method also further comprising the steps of:
making a portion of the continuous portion plastically flow in a direction opposite to the cylinder portion in the axial direction to form said second cylinder portion (51).

## Patentansprüche

1. Verfahren zum Herstellen einer Laufringeinheit in einer Nabe zum Tragen eines Rades, die umfasst:
einen Zylinderabschnitt (32);
einen Flanschabschnitt (30), der von dem Zylinderabschnitt nach außen in Durchmesserrichtung gebogen ist; und
einen durchgängigen Abschnitt (24), der den Zylinderabschnitt (32) mit dem Flanschabschnitt integral verbindet,
wobei das Verfahren umfasst:
Aussetzen einer Metallplatte (26) einem Ausstanz- und plastischem Kaltverformungsarbeitsvorgang, um den Zylinderabschnitt (32), den Flanschabschnitt (30) und den durchgängigen Abschnitt (24) auszubilden,
diametrales Schrumpfen des Zylinderabschnittes (32), um eine Wandstärke des Zylinderabschnittes (32) zu vergrößern; und
Verursachen eines plastischen Flusses eines dem Zylinderabschnitt (32) zugeordneten Wandungsabschnittes in Richtung des durchgängigen Abschnittes (24), um den durchgängigen Abschnitt (24) mit einer größeren Dicke als die Metallplatte auszuformen,
wobei der durchgängige Abschnitt (24) eine größere Dicke als die Metallplatte (26) hat.

2. Verfahren zum Herstellen einer Laufringeinheit in einer Nabe zum Tragen eines Rades nach Anspruch 1, wobei die Laufringeinheit des Weiteren umfasst:
einen zweiten Zylinderabschnitt (51), der sich von einem radial inneren Ende des Flanschabschnittes (48) erstreckt,
wobei sich der zweite Zylinderabschnitt (51) in einer dem Zylinderabschnitt (45) entgegengesetzten axialen Richtung erstreckt,
wobei das Verfahren des Weiteren die Schritte umfasst:
Verursachen eines plastischen Flusses eines dem durchgängigen Abschnitt zugeordneten Abschnittes in eine dem Zylinderabschnitt entgegengesetzte Richtung in der axialen Richtung, um den zweiten Zylinderabschnitt (51) auszubilden.

## Revendications

1. Procédé de fabrication d'un élément de piste dans une unité de moyeu destinée à supporter une roue, qui comporte
une partie de cylindre (32) ;
une partie de bride (30) pliée vers l'extérieur depuis la partie de cylindre dans une direction de diamètre de celle-ci ; et
une partie continue (24) qui relie d'un seul tenant la partie de cylindre (32) à la partie de bride,
le procédé comportant le fait de :
soumettre une plaque métallique (26) à un poinçonnage et un travail plastique à froid afin de former la partie de cylindre (32), la partie de bride (30) et la partie continue (24),
contracter diamétralement la partie de cylindre (32) afin d'augmenter une épaisseur de paroi de la partie de cylindre (32) ; et
amener une partie d'une paroi de la partie de cylindre (32) à s'écouler de manière plastique jusqu'à la partie continue (24) afin de rendre la partie continue (24) d'une épaisseur plus grande que la plaque métallique,
la partie continue (24) étant d'une épaisseur plus grande que la plaque métallique (26).

2. Procédé de fabrication d'un élément de piste dans une unité de moyeu destinée à supporter une roue selon la revendication 1, ledit élément de piste comportant en outre une deuxième partie de cylindre (51) s'étendant depuis une extrémité interne radiale de la partie de bride (48),
la deuxième partie de cylindre (51) s'étendant dans une direction axiale opposée à la partie de cylindre (45),
le procédé comportant également en outre les étapes consistant à :
amener une partie de la partie continue à s'écouler de manière plastique dans une direction opposée à la partie de cylindre dans la direction axiale afin de former ladite deuxième partie de cylindre (51).
